# DEMANDE DE BREVET EUROPEEN

(11) **EP 3 144 126 A1**
(43) Date de publication de la demande: **22.03.2017**
(21) Numéro de dépôt: 16189322.7
(22) Date de dépôt: 16.09.2016
(51) Int. Cl.: B29C 65/10, B29C 65/48, B29C 65/50

(54) **PROFILE SOUDABLE ET PROCÉDÉ ASSOCIÉ, POUR LA SOUDURE DE PANNEAUX EN MATÉRIAU PLASTIQUE**

(30) Priorité: 16.09.2015 FR 1570040; 29.09.2015 FR 1559216
(71) Demandeur: ASM, 44350 Guerande (FR); Davoudi, Farhooman, 77680 Roissy En Brie (FR)
(72) Inventeur: DAVOUDI, Farhooman, 77680 Roissy en Brie (FR)
(74) Mandataire: Argyma

(57) **Abrégé**

La présente invention a pour objet une baguette de soudure permettant la réalisation d'une soudure plastique sur des panneaux en matériau plastique, en vue de les fixer l'un à l'autre. La présente invention vise aussi le procédé de soudure correspondant.

En particulier, la présente invention prévoit l'utilisation de baguettes de soudures (1), ou de profilés structurels et de soudure (15) en comprenant les caractéristiques, présentant au moins une languette (31) sous laquelle se trouve une bosse (2) s'étendant longitudinalement et formant une réserve de matière. Une fois la baguette de soudure (1) mise en place le long d'une ligne de soudure souhaitée, sous l'effet d'un échauffement, la réserve de matière (2) est ramollie et fusionne avec une portion de panneau située en vis-à-vis, de façon à réaliser une soudure plastique définitive, et la languette (31) est rabattue sur ladite ligne de soudure, pour la masquer.

## Description

### DOMAINE TECHNIQUE ET OBJET DE L'INVENTION

L'invention concerne la soudure de panneaux en matériau plastique, tels que des panneaux de revêtement de sol ou mural, ou encore des panneaux autoportants, liés entre eux par des profilés structurels et soudés par l'intermédiaire d'une baguette de soudure, à l'aide d'une technique de soudure plastique.

Plus précisément, la présente invention vise principalement une baguette de soudure ou un profilé structurel et de soudure comportant les caractéristiques d'une telle baguette de soudure, et un procédé de soudure associé, la baguette de soudure comportant au moins une languette recouvrant une portion de panneau à souder, ladite au moins une languette présentant une réserve de matière intégrée destinée à fusionner avec la portion de panneau située en vis-à-vis, pour réaliser la soudure plastique définitive de panneaux juxtaposés. L'invention vise aussi un procédé pour réaliser, à l'aide d'un outil adapté et d'un profilé intégrant ou coopérant avec une telle baguette de soudure, la soudure de panneaux en matériau plastique, notamment composite.

### ETAT DE LA TECHNIQUE

La problématique générale concerne la soudure plastique de panneaux, notamment de panneaux plastiques composites, à l'aide de baguettes de soudure, lesdits panneaux étant assemblés par l'intermédiaire de profilés structurels. Selon l'invention, lesdites baguettes de soudure peuvent être intégrées auxdits profilés structurels ou en être distincts.

Il est connu que des panneaux, tels que des panneaux de revêtement de sol ou mural, ou des panneaux autoportants pour former par exemple des cabines de douche, peuvent être soudés l'un à l'autre par l'intermédiaire d'une technique de soudure plastique. La soudure plastique, comme le sait l'homme du métier, consiste à souder l'un à l'autre deux corps en plastique en échauffant un volume à l'interface entre les deux corps et de la matière apport, telle qu'une baguette de soudure, de façon à ramollir la matière plastique des deux corps en vis-à-vis et de ladite matière apport de sorte que la matière desdits deux corps fusionnent avec la matière apport, à savoir, typiquement une baguette de soudure, réalisant ainsi la soudure définitive des deux corps entre eux, les deux corps étant généralement, par ailleurs, maintenus en pression l'un contre l'autre.

Dans ce contexte, l'état de l'art comprend différents exemples de procédés de soudure plastique à l'aide de profilés de soudure, pour fixer entre eux des panneaux juxtaposés, tels que des panneaux en matériau plastique.

Le document WO 2013/132406 décrit ainsi un exemple de procédé de soudure de panneaux en plastique, notamment composites.

Cependant, les procédés de soudure plastique connus, permettant la soudure de profilés en plastique et l'assemblage de panneaux en matériau plastique présentent différents inconvénients, liés d'une part à la technicité requise pour leur mise en oeuvre, et d'autre part au rendu esthétique déficient des soudures réalisées via ces procédés.

En effet, les procédés de soudure plastique connus nécessitent, pour leur mise en oeuvre, un savoir-faire technique dont seuls les professionnels disposent. Ainsi, pour souder correctement deux panneaux plastiques, après avoir positionné correctement les panneaux à souder, chanfrein contre chanfrein, les avoir bridés pour les maintenir en place pendant la soudure et avoir réalisé un pointage des deux panneaux, il est indispensable, aujourd'hui, de maîtriser à la fois un apport de matière plastique extérieur permettant de réaliser la soudure, ladite matière plastique apportée se présentant sous la forme d'une baguette en plastique, et l'échauffement du volume exact, à l'interface entre les panneaux à souder, permettant de ramollir les deux panneaux et la baguette de soudure en plastique, de façon à permettre leur fusion, sans toutefois ramollir la matière au-delà du volume nécessaire pour réaliser la soudure. Il est en outre primordial d'avancer à une vitesse très précise, de façon à bien provoquer le ramollissement nécessaire de la matière des deux panneaux à souder et de la baguette de soudure en plastique, au risque que la soudure ne prenne pas, et sans toutefois trop échauffer la matière, au risque de provoquer des brûlures d'aspect inesthétique. Enfin, en bout de ligne de soudure, il faut couper soigneusement la baguette de soudure en plastique, ce qui fait souvent l'objet d'un autre défaut esthétique.

En pratique, cela rend quasiment impossible la réalisation d'une telle opération de soudure plastique par un particulier. De fait, généralement, même un professionnel ne parvient pas à réaliser une soudure parfaite, de petites brûlures subsistant le plus souvent à un endroit ou à un autre autour de la ligne de soudure, le plus souvent au début de ladite ligne de soudure, et la ligne de soudure n'étant pas parfaitement lisse.

Aujourd'hui, pour tenter de pallier cet inconvénient, des outils ont été développés, comprenant notamment une buse de chauffage permettant de réaliser l'échauffement voulu, et comprenant par ailleurs un guide pour guider l'apport de matière plastique à l'avant de la buse de chauffage, et l'amener automatiquement au fur et à mesure de l'avancée.

Cependant, ces outils, s'ils ôtent une partie de la complexité de l'opération, n'empêche pas que des brûlures surviennent le long de la ligne de soudure et nécessitent toujours une utilisation par un technicien spécialisé aguerri.

De plus, il reste nécessaire de réaliser un apport de matière extérieure, ce qui implique de gérer, lors d'une opération de soudure, à la fois le positionnement des panneaux, le positionnement de l'apport de matière (à couper en bout de ligne de soudure), et l'avancée de l'outil (buse de chauffage en particulier).

Enfin, le rendu esthétique est également toujours altéré par le fait que la ligne de soudure ne peut être parfaitement lisse.

Par ailleurs, dans le contexte particulier de la réalisation de structures constituées de panneaux en matériau plastique, autoportantes, telles que des cabines de douche par exemple, les procédés de soudure plastique actuelles ne sont pas adaptés car ils ne permettent pas d'obtenir une soudure définitive suffisamment étanche. De ce fait, les techniques actuelles pour former de telles structures autoportantes consistent à thermoformer de larges plaques en matériau plastique pour obtenir la forme de structure voulue. Or, ces techniques de thermoformage sont extrêmement énergivores, ce qui est néfaste aussi bien du point de vue économique que du point de vue de la préservation de l'environnement.

Il existe donc un besoin pour un profilé - également appelé baguette - de soudure et un procédé de soudure plastique associé permettant de réaliser aisément la soudure de panneaux en matériau plastique, notamment composites, tout en obtenant un rendu esthétique amélioré.

A cette fin, la présente invention permet la réalisation d'une soudure plastique définitive et étanche de panneaux en matériau plastique, notamment composites, sans nécessité d'apport de matière extérieure pour réaliser la soudure et avec un rendu esthétique amélioré.

Le procédé selon l'invention permet notamment la réalisation de structures autoportantes, telles que des cabines de douche, réalisées par l'assemblage de panneaux soudés entre eux de façon définitive et étanche, et donc sans nécessiter la mise en oeuvre de techniques de thermoformage très consommatrices en énergie.

Dans ce contexte, l'invention concerne une baguette de soudure, ou un profilé de soudure, intégré ou insérable dans un profilé structurel assurant l'interface entre deux panneaux à souder, ladite baguette de soudure comprenant au moins une languette, accolée à un corps central situé à l'interface entre lesdits panneaux. Ladite au moins une languette comprend sous sa surface, du côté du panneau à souder, une réserve de matière plastique constituant l'apport de matière plastique en vue de la réalisation de la soudure. L'apport de matière est par conséquent intégré au profilé de soudure selon l'invention. La (les) languette(s) est (sont) en outre destinée(s) à être rabattue(s) sur la (les) lignes de soudure, permettant de masquer ladite ligne de soudure et ses éventuelles imperfections (petites brûlures et aspect lisse en particulier).

La présente invention concerne également un procédé de soudure plastique mettant en oeuvre une telle baguette de soudure, ainsi qu'un outil dédié à la mise en oeuvre dudit procédé.

### PRESENTATION GENERALE DE L'INVENTION

A cet effet, plus précisément, l'invention concerne une baguette de soudure, pour la soudure de panneaux en matériau plastique juxtaposés, ladite baguette de soudure présentant un corps central s'étendant longitudinalement sur toute la longueur de la baguette de soudure.

Ladite baguette de soudure est remarquable en ce qu'elle comprend au moins une languette accolée au corps central, ladite languette s'étendant longitudinalement sur toute la longueur de ladite baguette de soudure et ladite languette étant apte à couvrir une faible portion d'un panneau situé en vis-à-vis, et en ce que ladite languette comporte une base plane et une bosse s'étendant longitudinalement sur toute la longueur de ladite baguette de soudure, en vis-à-vis d'un panneau à souder, ladite bosse formant une réserve de matière plastique configurée pour fusionner avec la portion de panneau située en vis-à-vis, sous l'effet d'un échauffement adapté d'un volume comprenant ladite réserve de matière et ladite portion de panneau située en vis-à-vis, de sorte que la matière de la réserve de matière ramollie et la portion de panneau ramollie fusionnent de façon à créer une soudure plastique définitive entre la baguette de soudure et ledit panneau.

Selon un mode de réalisation, la baguette de soudure est destinée à être adaptée sur un profilé structurel ou intégrée dans la masse d'un profilé structurel, ladite baguette de soudure étant destinée à coopérer avec le profilé structurel assurant l'interface entre les panneaux juxtaposés et le bridage desdits panneaux.

Selon un mode de réalisation, la bosse formant la réserve de matière plastique comprend par ailleurs au moins une excroissance de taille inférieure à ladite bosse formant une réserve de matière plastique, ladite au moins une excroissance formant une sous-réserve de matière plastique, de taille inférieure à la réserve de matière plastique, ladite sous-réserve de matière étant située dans le volume de l'échauffement, sa taille inférieure étant configurée pour provoquer un ramollissement de ladite sous-réserve plus rapide que le ramollissement de la réserve de matière plastique, de façon à effectuer un pointage préalable à la soudure plastique définitive.

Avantageusement, la réserve de matière est située à une distance déterminée du panneau situé en vis-à-vis, ladite distance déterminée étant configurée de telle façon que l'échauffement du volume comprenant la réserve de matière et la portion de panneau située en vis-à-vis n'entraîne qu'un échauffement partiel et non la fusion de la base plane de la languette ni du corps central de la baguette de soudure.

Selon un mode de réalisation, la languette comprend au moins bosse secondaire, s'étendant longitudinalement sur toute la longueur de ladite baguette de soudure et située en dehors du volume d'échauffement, entre la réserve de matière et le corps central, pour former un barrage d'étanchéité.

Selon un mode de réalisation, la baguette de soudure comprend au moins deux languettes, lesdites deux languettes étant situées de part et d'autre du corps central, et lesdites deux languettes étant destinées à se trouver respectivement en vis-à-vis de deux panneaux à souder l'un à l'autre par l'intermédiaire de ladite baguette de soudure.

La présente invention vise également un profilé structurel et de soudure assurant la liaison entre des panneaux en matériau plastique, tels que des panneaux de revêtement de sol ou mural ou des panneaux autoportants, comportant au moins une baguette de soudure intégrée dans la masse dudit profilé structurel et de soudure.

Selon un autre mode de mise en oeuvre, la présente invention consiste également en un ensemble de profilé structurel et de soudure, comprenant un profilé structurel et au moins une baguette de soudure telle que brièvement décrite ci-dessus, ledit profilé structurel présentant au moins un logement apte à recevoir l'insertion de ladite au moins une baguette de soudure.

Par exemple, un tel ensemble de profilé structurel et de soudure peut comprendre un profilé structurel en aluminium et au moins une baguette de soudure en matériau plastique.

En outre, la présente invention concerne aussi un procédé de soudure de panneaux, comprenant les étapes suivantes :
i. le positionnement d'au moins deux panneaux juxtaposés, reliés entre eux et maintenus par des moyens de bridage adaptés, tel qu'un profilé structurel ;
ii. le positionnement d'une baguette de soudure telle que brièvement décrite ci-dessus, de telle façon que ladite au moins une languette de ladite baguette de soudure coïncide avec une ligne de soudure souhaitée sur un panneau ;
iii. au moyen d'un outil présentant une buse de chauffage et un moyen adapté pour rabattre ladite au moins une languette, tel qu'une roulette :
   a. l'échauffement, au moyen de la buse de chauffage, d'un volume comprenant la réserve de matière plastique de ladite au moins une languette de la baguette de soudure et une portion du panneau située en vis-à-vis, de façon à ramollir d'une part la réserve de matière plastique et d'autre part la portion de panneau située en vis-à-vis, de telle sorte que la réserve de matière ramollie et la portion de panneau ramollie fusionnent, assurant la soudure plastique de la baguette de soudure et du panneau ;
   b. l'aplatissement, au moyen du moyen adapté, tel qu'une roulette, de ladite au moins une languette de la baguette de soudure de façon à masquer la ligne de soudure.

La présente invention vise aussi un outil dédié, pour la soudure plastique d'un profilé de soudure sur des panneaux en matériau plastique, comprenant une buse de chauffage à une extrémité, l'autre extrémité correspondant à une zone préhensible, et un moyen adapté pour rabattre une languette, tel qu'une roulette, du côté de l'extrémité où se trouve la buse de chauffage et en amont de cette dernière, ladite buse de chauffage et ledit moyen adapté pour rabattre ladite languette étant configurés pour mettre en oeuvre l'étape iii. du procédé décrit ci-dessus.

### DESCRIPTION DES FIGURES

L'invention sera mieux comprise à la lecture de la description qui va suivre, donnée uniquement à titre d'exemple, et se référant aux dessins annexés sur lesquels :
- la figure 1 représente un exemple de profilé structurel et de soudure, selon l'invention ;
- la figure 2 représente un assemblage d'un profilé structurel et d'une pluralité de baguettes de soudure, formant un ensemble de profilé conforme à la présente invention ;
- la figure 3 montre la tête d'un outil dédié à la mise en oeuvre du procédé de soudure selon l'invention ;
- la figure 4 montre la mise en oeuvre de l'outil dédié pour la réalisation d'une soudure conformément à la présente invention ;
- la figure 5 représente une partie d'une baguette de soudure ou d'un profilé structurel et de soudure selon l'invention, la réserve de matière étant à une distance déterminée du panneau à souder ;
- la figure 6 montre une partie d'une baguette de soudure ou d'un profilé structurel et de soudure selon l'invention, la réserve de matière comprenant une excroissance permettant de réaliser un pointage avant la soudure définitive ;
- la figure 7 représente un profilé structurel et de soudure avec des barrages d'étanchéité pour assurer l'étanchéité de la soudure.

### DESCRIPTION DETAILLEE DE L'INVENTION

L'invention est présentée principalement pour une application à la soudure plastique de panneaux en matériau plastique, notamment composites, tels que des panneaux de revêtement ou des panneaux autoportants pour former par exemple des cabines de douche. De tels panneaux sont assemblés à l'aide de profilés structurels formant, comme leur nom l'indique, une structure sur laquelle une pluralité de panneaux sont assemblés et guidés dans leur positionnement. Dans ce contexte, la présente invention propose en particulier un profilé structurel et de soudure, à apport de matière intégré, permettant d'accélérer et de faciliter la soudure entre eux de tels panneaux en matériau plastique, notamment composites.

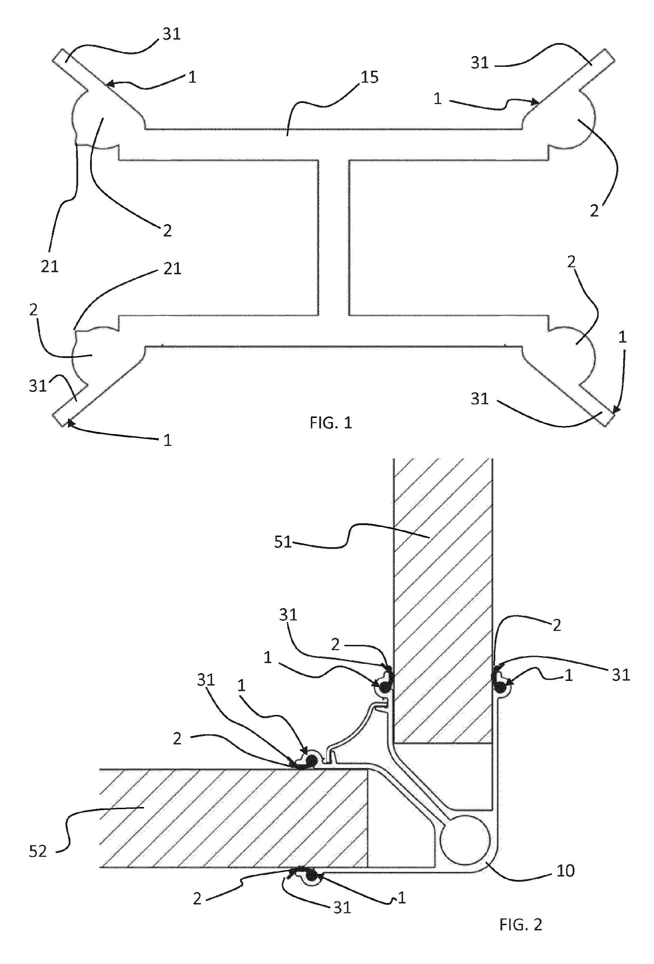

En référence à la figure 1, la présente invention concerne notamment un profilé structurel en plastique 15, intégrant une baguette de soudure 1, formant ainsi un profilé structurel et de soudure monobloc 15.

Il est à noter que, selon d'autres modes de réalisation, la baguette de soudure 1, en plastique, peut être distincte du profilé structurel 10 et venir se loger dans des logements aménagés sur ledit profilé, en vue de l'opération de soudure.

Le mode de réalisation représenté à la figure 1 consiste donc en un profilé de soudure monobloc, constitué de plastique, et intégrant les caractéristiques d'une pluralité de baguettes de soudure 1.

Ledit profilé structurel et de soudure 15 comprend un corps central destiné, lors de l'opération de soudure, à être positionné à l'interface entre des panneaux juxtaposés à souder. De part et d'autre de ce corps central, le profilé structurel et de soudure représenté à la figure 1 comprend les caractéristiques spécifiques de baguettes de soudure 1 selon l'invention, se présentant sous la forme de languettes 31, souples ou rigides, chaque languette 31 présentant une base plane et une bosse formant une réserve de matière plastique 2, constituant l'apport de matière utile à la soudure plastique des panneaux. Lesdites languettes 31 et lesdites bosses 2 s'étendent longitudinalement, sur toute la longueur du profilé structurel et de soudure 15.

### Le procédé de soudure

En pratique, pour réaliser la soudure de deux panneaux en matériau plastique, conformément à la présente invention, il est prévu de positionner les panneaux à souder 51, 52 de façon à ce que leurs tranches se trouvent en vis-à-vis, guidés par un profilé structurel pouvant être positionné à l'interface entre les panneaux à souder.

Lesdits panneaux 51, 52 sont ainsi juxtaposés et pré-positionnés à l'aide d'un profilé structurel 10, 15 qui, soit intègre les caractéristiques de baguettes de soudure, comme représenté à la figure 1, soit est apte à recevoir et à coopérer avec au moins une telle baguette de soudure, comme représenté à la figure 2.

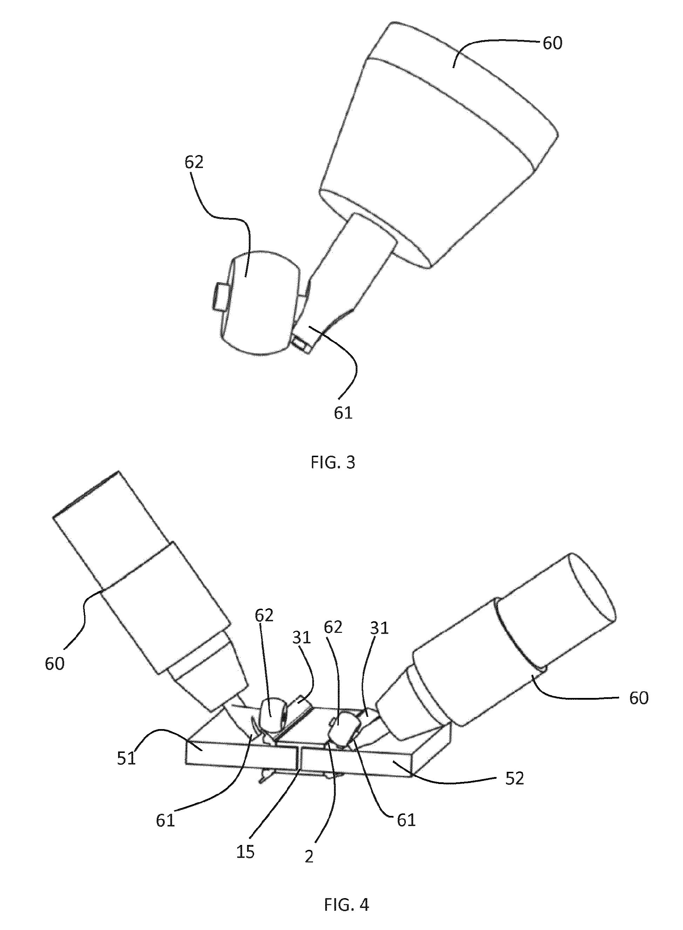

A l'aide d'une buse de chauffage ou, de préférence, à l'aide d'un outil spécial 60 (représenté sur les figures 3 et 4) comprenant à la fois une buse de chauffage 61 et une roulette 62 apte à aplatir la languette 31 lors de l'opération de soudure, comme cela sera décrit par la suite, un volume allant de la réserve de matière à la portion de panneau située en vis-à-vis est échauffé.

La matière plastique située dans ce volume est ainsi ramollie, fondue. De ce fait, la matière plastique comprise dans la bosse 2 sous chaque languette 31 et la portion de chaque panneau 51, 52 située en vis-à-vis, fusionnent, réalisant ainsi la soudure plastique définitive des panneaux entre eux, par l'intermédiaire de la (des) baguette(s) de soudure 1.

De préférence à l'aide de la roulette de l'outil dédié 60 évoqué ci-dessus, chaque languette 31 de la (des) baguette(s) de soudure 1 ou du profilé structurel et de soudure 15 est ensuite aplatie et vient couvrir la ligne de soudure sur chaque panneau.

En d'autres termes, à l'aide de l'outil dédié 60 représenté à la figure 3, comprenant une buse de chauffage 61 et une roulette 62 apte à aplatir la languette 31 de chaque côté du corps central de la baguette de soudure 1, la soudure plastique de deux panneaux 51, 52 peut ainsi être réalisée en un seul passage sur chaque languette 31, de façon automatique.

En référence à la figure 4, en effet, la forme de la baguette de soudure 1 ou du profilé structurel et de soudure 15 et celle de la tête de l'outil dédié sont adaptées et configurées pour que la buse de chauffage 61 échauffe uniquement le volume nécessaire, comprenant la réserve de matière 2 et la portion de panneau située en vis-à-vis. Sous l'effet de cet échauffement, comme décrit précédemment, la soudure plastique se réalise. En parallèle, la roulette 62 située en amont de la buse de chauffage 61, au fur et à mesure de l'avancée du l'outil le long de la ligne de soudure, vient aplatir la languette 31 qui vient recouvrir ladite ligne de soudure, masquant de ce fait toute éventuelle imperfection de surface (aspérités, brûlures), et permettant d'obtenir un rendu esthétique optimal.

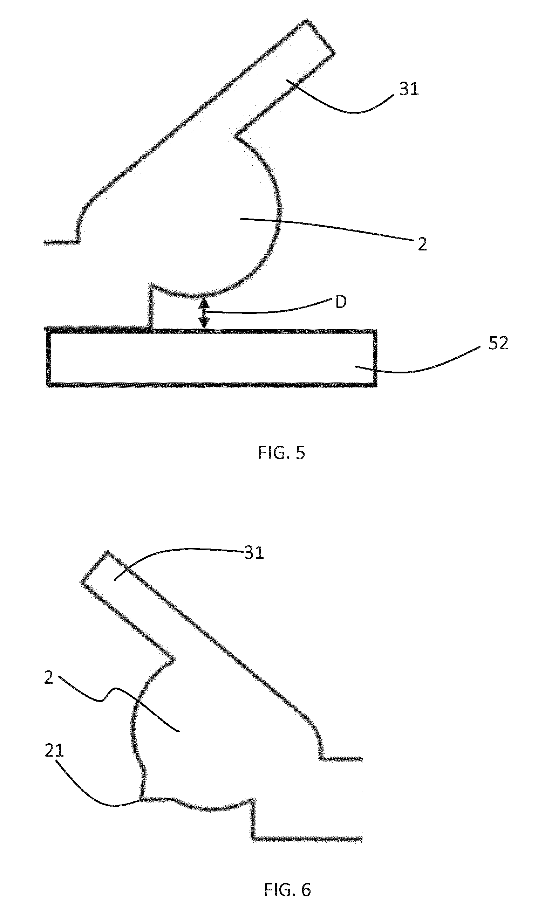

Selon le mode de réalisation représenté à la figure 5, la baguette de soudure 1, ou le profilé structurel et de soudure 15, est en outre configuré(e) de façon à ce que chaque réserve de matière 2 se trouve, après mise en place du profilé structurel et de la baguette de soudure 1, ou du profilé structurel et de soudure 15, au niveau de l'interface entre les panneaux 51, 52 à souder, avant l'opération de soudure, à une distance D adaptée du panneau à souder situé en vis-à-vis, cette distance D étant au minimum de 1 mm, de telle sorte que, lors de son passage pour réaliser l'opération de soudure, la buse de chauffage 61 de l'outil mis en oeuvre échauffe précisément le volume souhaité, comprenant la réserve de matière plastique 2 et la portion de panneau en vis-à-vis, et non, en particulier, la base plane de la languette 31, qui n'est que partiellement échauffée et n'est ni ramollie ni fondue lors de l'opération de soudure.

Ainsi, la base plane de la languette 31 n'est pas chauffée directement, et n'est que partiellement échauffée. Elle n'est donc pas ramollie, encore moins fondue, mais la languette 31 est rabattue sur la ligne de soudure, après fusion de la réserve de matière 2, par exemple aidée en cela par la roulette 62 adaptée en amont de la buse de chauffage 61 sur l'outil dédié 60 décrit précédemment.

Par ailleurs, selon un mode de réalisation avancé, représenté à la figure 6, chaque bosse 2 peut comprendre au moins excroissance 21, typiquement une ou deux pointes, apte à réaliser l'équivalent d'un pointage lors de l'opération de soudure. En effet, lors de l'échauffement du volume allant de la réserve de matière à la portion de panneau située en vis-à-vis, ladite au moins une excroissance 21, de volume réduit par rapport à la réserve de matière 2 et à la portion de panneau située en vis-à-vis, se ramollit et fond plus rapidement, de façon à réaliser au moins un petit point de soudure juste avant que la soudure définitive ne se réalise lors de la fusion de la réserve de matière avec la portion de panneau située en vis-à-vis.

Une fois que la languette 31 est rabattue, le profilé 10, 15 se met en place, cela signifie que la bosse 2 est fondue et que la matière a fusionné avec la matière ramollie et partiellement fondue de la portion de panneau en vis-à-vis ; en d'autres termes, la soudure plastique définitive est alors réalisée. La base plane de la languette 31, recouvrant la ligne de soudure, assure un rendu esthétique optimal de la soudure.

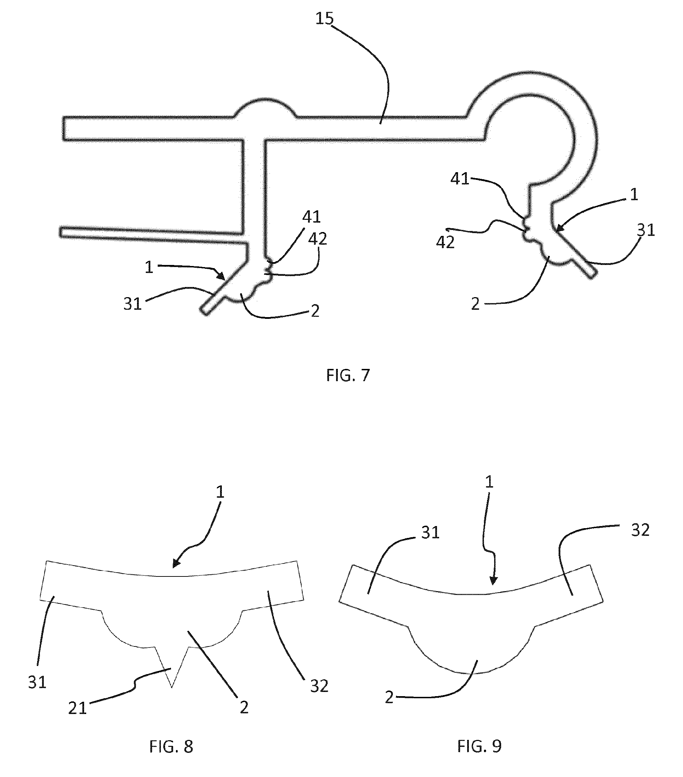

Selon un mode de réalisation avancé, la baguette de soudure 1, ou le profilé structurel et de soudure 15, peut également comprendre au moins une protubérance, et de préférence deux protubérances 41, 42, entre la réserve de matière 2 et le corps central, comme représenté à la figure 7. Cette (ces) protubérance(s) 41, 42 forme(nt) un barrage d'étanchéité permettant d'assurer la bonne étanchéité de la soudure.

La forme du profilé structurel 10, 15, qu'il intègre ou non dans sa masse la baguette de soudure 1, peut en outre également être adaptée de façon à améliorer l'étanchéité de l'assemblage de panneaux.

Comme évoqué précédemment, la présente invention vise notamment une baguette de soudure 1 permettant de réaliser des soudures plastiques aisément et rapidement. Cette baguette de soudure 1 peut être intégrée dans la masse à un profilé structurel 15 en plastique, dont les caractéristiques (forme, dimensions ...etc.) sont adaptées selon les panneaux à souder, comme représenté à la figure 1. A la figure 2, en revanche, une pluralité de baguettes de soudure 1 indépendantes du profilé structurel 10 sont mises en oeuvre. Ledit profilé structurel assure ainsi le bridage et permet la mise en position des panneaux à souder. En outre, ce profilé structurel 10 comporte des logements, tels que des glissières, dans lesquelles peuvent se loger les baguettes de soudure 1.

Typiquement, le profilé structurel 10 peut ainsi être en aluminium, alors que les baguettes de soudure 1 restent en plastique, avec des caractéristiques (forme, dimensions, etc.) adaptées selon les panneaux à souder, formant ainsi, après assemblage, un profilé structurel et de soudure bi-matériau. Pour le reste, le principe de fonctionnement de ces baguettes de soudure 1 et le procédé de soudure associé restent inchangés : à l'aide d'un outil adapté 60, comprenant de préférence une buse de chauffage 61 et une roulette 62 placée derrière la buse de chauffage 61 située à l'extrémité de l'outil, la réserve de matière 2 présente sous la languette 31 de la baguette de soudure 1 est échauffée en même temps qu'une portion du panneau 51, 52 située en vis-à-vis. La fusion entre elles de cette réserve de matière 2 et de cette portion de panneau située en vis-à-vis réalise la soudure définitive. Les protubérances 41, 42 prévues entre la réserve de matière et le corps central assurent la fonction de barrage d'étanchéité.

De préférence, la forme du profilé structurelle 10 est en outre adaptée pour comprendre des logements spécifiques prévus pour recevoir la matière plastique contenue à l'origine dans la bosse 2 et fondue lors de l'opération de soudure. Ces logements spécifiques présentent une forme adaptée pour éviter toute sortie de matière plastique fondue y ayant pénétré. Lesdits logements spécifiques pour recevoir de la matière plastique fondue, assurant une fonction anti-retour de ladite matière plastique fondue hors du profilé structurel 10, après soudure, permettent d'obtenir une ligne de soudure particulièrement soignée.

En résumé, la présente invention concerne un procédé de soudure plastique, une baguette de soudure 1 et un outil dédié 60, pour réaliser aisément et rapidement l'assemblage de panneaux 51, 52 en matériau plastique, notamment composites, de façon définitive et étanche.

Une application particulière à la réalisation de cabines de douche autoportantes est possible, la présente invention permettant de s'affranchir de la mise en oeuvre de coûteuses opérations de thermoformage.

Il est à noter, en outre, que l'invention n'est pas limitée au mode de réalisation décrit à titre d'exemple et est susceptible de variantes à la portée de l'homme du métier.

Comme le montre l'ensemble des figures, la forme du profilé structurel et de soudure 15 ou du profilé structurel 10 destiné à coopérer avec une ou plusieurs baguettes de soudures 1, de même que la forme desdites baguettes, le cas échéant, peuvent être adaptées. La configuration de ces formes est possible à volonté et permet de réaliser tout type d'assemblage, impliquant deux ou plusieurs panneaux, formant ou non des angles entre eux.

Par ailleurs, les baguettes de soudure 1 précédemment décrites sont notamment prévues pour coopérer avec un profilé structurel 10 assurant l'interface entre les panneaux 51, 52 à souder, ainsi que leur bridage. Cependant, les baguettes de soudure 1 selon l'invention peuvent parfaitement être mises en oeuvre pour la soudure de panneaux en plastique, ces derniers étant bridés par d'autres moyens qu'un profilé structurel.

A titre d'exemple, les figures 8 et 9 montrent ainsi une baguette de soudure 1 comprenant deux languettes 31, 32 situées de part et d'autre du corps central de la baguette de soudure 1, lesdites languettes 31, 32 comprenant chacune une réserve de matière 2, lesdites deux languettes 31, 32 étant destinées à se trouver respectivement en vis-à-vis de deux panneaux composites à souder l'un à l'autre par l'intermédiaire de ladite baguette de soudure.

A la figure 8, la baguette de soudure 1 comprend par ailleurs une excroissance 21, destinée à la réalisation d'un pointage.

Dans ces exemples, les baguettes de soudure 1 sont adaptées pour permettre la soudure de panneaux juxtaposés, sans que ces derniers ne soient nécessairement bridés par l'intermédiaire d'un profilé structurel. En effet, lesdits panneaux peuvent être bridés par tout autre moyen adapté.

D'autres variantes sont encore possibles et à la portée de l'homme de l'art.

## Revendications

1. Baguette de soudure, pour la soudure de panneaux (51, 52) en matériau plastique juxtaposés, ladite baguette de soudure (1) présentant un corps central s'étendant longitudinalement sur toute la longueur de la baguette de soudure (1), et ladite baguette de soudure (1) étant **caractérisée en ce qu'**elle comprend au moins une languette (31, 32) accolée au corps central, ladite languette (31, 32) s'étendant longitudinalement sur toute la longueur de ladite baguette de soudure (1) et ladite languette (31, 32) étant apte à couvrir une faible portion d'un panneau situé en vis-à-vis, et **en ce que** ladite languette (31, 32) comporte une base plane et une bosse (2) s'étendant longitudinalement sur toute la longueur de ladite baguette de soudure (1), en vis-à-vis d'un panneau à souder, ladite bosse (2) formant une réserve de matière plastique (2) configurée pour fusionner avec la portion de panneau située en vis-à-vis, sous l'effet d'un échauffement adapté d'un volume comprenant ladite réserve de matière (2) et ladite portion de panneau située en vis-à-vis, de façon à créer une soudure plastique définitive entre la baguette de soudure (1) et ledit panneau (51, 52).

2. Baguette de soudure selon la revendication 1, destinée à être adaptée sur un profilé structurel (10) ou intégrée dans la masse d'un profilé structurel (15), ladite baguette de soudure (1) étant destinée à coopérer avec le profilé structurel (10, 15) assurant l'interface entre des panneaux juxtaposés (51, 52) et le bridage desdits panneaux (51, 52).

3. Baguette de soudure selon l'une des revendications précédentes, **caractérisé en ce que** la bosse formant la réserve de matière plastique comprend par ailleurs au moins une excroissance (21) de taille inférieure à ladite bosse (2) formant une réserve de matière plastique (21), ladite au moins une excroissance (21) formant une sous-réserve de matière plastique, de taille inférieure à la réserve de matière plastique (2), ladite sous-réserve de matière (21) étant située dans le volume de l'échauffement, sa taille inférieure étant configurée pour provoquer un ramollissement de ladite sous-réserve plus rapide que le ramollissement de la réserve de matière plastique (2), de façon à effectuer un pointage préalable à la soudure plastique définitive.

4. Baguette de soudure selon l'une des revendications précédentes, **caractérisé en ce que** la réserve de matière (2) est située à une distance déterminée (D) du panneau (51, 52) situé en vis-à-vis, ladite distance déterminée (D) étant configurée de telle façon que l'échauffement du volume comprenant la réserve de matière (2) et la portion de panneau située en vis-à-vis n'entraîne qu'un échauffement partiel et non la fusion de la base plane de la languette (31, 32) et du corps central de ladite languette baguette de soudure (1).

5. Baguette de soudure selon l'une des revendications précédentes, **caractérisé en ce que** la languette comprend au moins bosse secondaire (41, 42), s'étendant longitudinalement sur toute la longueur de ladite baguette de soudure (1) et située en dehors du volume d'échauffement, entre la réserve de matière (2) et le corps central, pour former un barrage d'étanchéité.

6. Baguette de soudure selon l'une des revendications précédentes, **caractérisé en ce qu'**elle comprend au moins deux languettes (31, 32), lesdites deux languettes (31, 32) étant situées de part et d'autre du corps central, et lesdites deux languettes (31, 32) étant destinées à se trouver respectivement en vis-à-vis de deux panneaux (51, 52) à souder l'un à l'autre par l'intermédiaire de ladite baguette de soudure (1).

7. Profilé structurel et de soudure assurant la liaison entre des panneaux en matériau plastique, tels que des panneaux de revêtement de sol ou mural ou des panneaux autoportants, **caractérisé en ce qu'**il comporte au moins une baguette de soudure (1) selon l'une des revendications 2 à 6, ladite baguette de soudure (1) étant intégrée dans la masse dudit profilé structurel et de soudure (15).

8. Ensemble de profilé structurel et de soudure, comprenant un profilé structurel et au moins une baguette de soudure selon l'une quelconque des revendications 2 à 6, ledit profilé structurel (10) présentant au moins un logement apte à recevoir l'insertion de ladite au moins une baguette de soudure (1).

9. Ensemble de profilé structurel et de soudure selon la revendication précédente, le profilé structurel (10) étant en aluminium et ladite au moins une baguette de soudure (1) étant en matériau plastique.

10. Procédé de soudure de panneaux en matériau plastique, comprenant les étapes suivantes :
i. le positionnement d'au moins deux panneaux juxtaposés (51, 52), reliés entre eux et maintenus par des moyens de bridage adaptés, tel qu'un profilé structurel (10, 15) ;
ii. le positionnement d'une baguette de soudure (1) selon l'une des revendications 1 à 6, de telle façon que ladite au moins une languette (31) de ladite baguette de soudure (1) coïncide avec une ligne de soudure souhaitée sur un panneau ;
iii. au moyen d'un outil (60) présentant une buse de chauffage (61) et un moyen adapté pour rabattre ladite au moins une languette (31, 32), tel qu'une roulette (62) :
a. l'échauffement, au moyen de la buse de chauffage (61), d'un volume comprenant la réserve de matière plastique (2) de ladite au moins une languette de la baguette de soudure (1) et une portion du panneau située en vis-à-vis, de façon à ramollir d'une part la réserve de matière plastique (2) et d'autre part la portion de panneau située en vis-à-vis, de telle sorte que la réserve de matière (2) ramollie et la portion de panneau ramollie fusionnent, assurant la soudure plastique de la baguette de soudure (1) et du panneau (51, 52) ;
b. l'aplatissement, au moyen du moyen adapté, tel qu'une roulette (62), de ladite au moins une languette (61, 62) de la baguette de soudure (1) de façon à masquer la ligne de soudure.

11. Outil pour la soudure plastique d'un profilé de soudure sur des panneaux en matériau plastique, **caractérisé en ce qu'**il comprend une buse de chauffage (61) à une extrémité, l'autre extrémité correspondant à une zone préhensible, et un moyen adapté pour rabattre une languette (31, 32), tel qu'une roulette (62), du côté de l'extrémité où se trouve la buse de chauffage (61) et en amont de cette dernière, ladite buse de chauffage (61) et ledit moyen (62) adapté pour rabattre ladite languette (31, 32) étant configurés pour mettre en oeuvre l'étape iii. du procédé selon la revendication précédente.
